Europäisches Patentamt

European Patent Office

Office européen des brevets

(19)

(11) Numéro de publication : **0 015 808**
**B1**

(12) **FASCICULE DE BREVET EUROPÉEN**

(45) Date de publication du fascicule du brevet :
03.02.82

(21) Numéro de dépôt : 80400240.0

(22) Date de dépôt : 20.02.80

(51) Int. Cl.³ : **B 01 D 35/06**, B 03 C 1/02,
G 21 C 19/30

(54) **Filtre pour l'épuration d'un fluide à haute pression et à haute température contenant des particules ferromagnétiques.**

(30) Priorité : 23.02.79 FR 7904739

(43) Date de publication de la demande :
17.09.80 (Bulletin 80/19)

(45) Mention de la délivrance du brevet :
03.02.82 Bulletin 82/05

(84) Etats contractants désignés :
BE CH DE GB IT NL SE

(56) Documents cités :
CH - A - 129 293
DE - B - 1 242 316
FR - A - 2 026 341
US - A - 3 841 486
US - A - 3 979 288

(73) Titulaire : **Framatome**
**Tour Fiat 1 place de la Coupole**
**F-92400 Courbevoie (FR)**

(72) Inventeur : **Dubourg, Michel**
**2 Rue Saint Cyran**
**F-78320 Le Mesnil Saint Denis (FR)**

(74) Mandataire : **Bouget, Lucien et al**
**CREUSOT-LOIRE 15 rue Pasquier**
**F-75383 Paris Cedex 08 (FR)**

Imprimerie Jouve, 18, rue St-Denis, 75001 Paris, France

Filtre pour l'épuration d'un fluide à haute pression et à haute température contenant
des particules ferromagnétiques

L'invention concerne un filtre pour l'épuration d'un fluide contenant des particules ferromagnétiques et plus particulièrement pour l'épuration des fluides réfrigérants des réacteurs nucléaires à eau.

Dans les réacteurs à eau sous pression, l'eau sous pression qui constitue le fluide primaire et qui vient en contact avec les éléments combustibles avant d'être envoyée dans les générateurs de vapeur pour l'échauffement et la vaporisation de l'eau alimentaire de la chaudière ou fluide secondaire se charge au cours de sa circulation dans le réacteur et dans les générateurs de vapeur de particules d'oxyde de fer formées au cours du contact prolongé de l'eau avec certaines parties en acier du réacteur nucléaire.

Dans les réacteurs à eau bouillante, l'eau du circuit principal vient au contact avec les éléments combustibles et se vaporise. La vapeur ainsi produite alimente la turbine. L'eau condensée se charge de particules dans la bâche d'eau. L'eau est réintroduite dans le réacteur et circule au moyen de pompes de circulation qui assurent une circulation forcée dans la cuve au moyen d'éjecteurs. Les particules d'oxydes ont tendance à s'activer et à se déposer sur les assemblages combustibles au moment de la vaporisation.

Il est très important d'éliminer ces particules d'oxyde, du fluide grâce à un filtre afin d'éviter que la quantité d'oxyde dans ce fluide ne devienne excessive et que ces particules ne s'activent après avoir séjourné dans le cœur et se déposent sur les composants, en contribuant de manière importante à l'activité et à la contamination des surfaces.

Les particules piégées par le filtre ne peuvent plus circuler dans les circuits et on évite ainsi de contaminer le personnel d'exploitation et de maintenance qui est susceptible ainsi de rester plus longtemps au voisinage des installations du réacteur sans subir une irradiation prohibitive.

Cette épuration du fluide doit se faire bien entendu pendant le fonctionnement du réacteur pour assurer une épuration continue de l'eau.

La difficulté vient de ce que cette filtration doit être effectuée sur de l'eau à haute température et à haute pression.

On a proposé d'utiliser, pour effectuer cette épuration, un filtre électromagnétique comportant une enveloppe cylindrique remplie de billes en matériau ferromagnétique et plus particulièrement de billes en acier qu'on soumet à un cycle d'aimantation de façon que ces billes puissent retenir les particules ferromagnétiques transportées par le fluide.

Un tel filtre qui comporte un dispositif d'aimantation entourant l'enveloppe cylindrique dans laquelle sont disposées les billes, pour la création d'un champ magnétique susceptible d'aimanter les billes, est généralement disposé en parallèle sur une pompe servant à la circulation à l'eau.

On dérive sur le filtre une proportion du débit du fluide qui est généralement de l'ordre de quelques % du débit total de ce fluide.

Il est ainsi possible d'épurer en continu le fluide sans pour autant interférer avec la circulation de ce fluide dans les circuits du réacteur et sans dégradation thermique (refroidissement) du fluide.

Dans les filtres électromagnétiques utilisés jusqu'ici, le courant de fluide à épurer rentre axialement par une extrémité du filtre, par l'intermédiaire d'une conduite traversant l'un des fonds de l'enveloppe cylindrique, traverse la couche de billes d'acier et ressort par l'autre extrémité du filtre, par une conduite traversant l'autre fond de l'enveloppe cylindrique pour être recyclé dans le circuit. Un tel dispositif est par exemple décrit dans le brevet US 3 841 486.

Dans un tel filtre, les écailles d'oxyde ont tendance à se déposer constamment dans les mêmes zones de la masse de billes d'acier, la circulation du fluide se faisant suivant un trajet constant et l'efficacité de la filtration n'est pas optimale car le parcours du fluide à travers le lit de billes est relativement court, à moins que l'on utilise un filtre de très grande dimension d'encombrement et de coût importants.

On connaît également (brevet US 3 979 288) un filtre électromagnétique où le liquide à épurer est introduit à l'intérieur du lit de billes et à la partie centrale de celui-ci par une conduite d'arrivée de direction axiale en communication avec un dispositif de répartition transversal du liquide dans le lit de billes. Le liquide épuré sort du filtre par des conduites traversant les fonds bombés qui ferment le filtre à chacune de ses extrémités.

Dans un tel dispositif, le liquide à épurer ne traverse que la moitié du lit de billes, une partie de ce liquide traversant le lit de bas en haut et l'autre partie de haut en bas. L'efficacité du filtre est réduite par la faible longueur du parcours du liquide qui traverse le lit de billes et par le fait qu'une partie du liquide circule de haut en bas.

En effet, les particules magnétiques se déposent plus facilement lorsque le courant de liquide est ascendant, la force magnétique et la gravité favorisant alors l'une et l'autre ce dépôt.

Le lit de billes, dans un tel dispositif où l'eau épurée a une forte énergie cinétique à sa sortie du filtre, doit être maintenu entre deux plaques perforées ou grilles évitant l'entraînement des billes dans les conduits d'évacuation, avec un volume libre suffisant pour permettre l'agitation des billes dans le filtre. Les billes n'occupent donc qu'une partie du volume intérieur du filtre, ce qui conduit à un encombrement important du filtre pour obtenir une efficacité de filtration suffisante.

Enfin, aucun des dispositifs connus ne permet d'accéder au lit de billes, dans un but de contrôle ou de maintenance, puisque les fonds bombés ne peuvent être dessoudés facilement étant donné qu'ils sont traversés par des conduites d'arrivée ou d'évacuation du fluide.

On connaît également (demande de brevet allemand DE-B 1 242 316) un filtre ayant une partie supérieure équipée d'aimants permanents et une partie inférieure équipée de filtres mécaniques où l'arrivée et l'évacuation du fluide se fait à travers le fond inférieur du filtre. Cependant, ce filtre ne permet pas de traiter un fluide à haute température et sous haute pression et la circulation du fluide dans le filtre se fait de haut en bas, le fluide étant introduit à la partie supérieure du filtre par une conduite verticale disposée suivant l'axe du filtre et récupéré dans le fond inférieur de celui-ci.

Un tel filtre qui permet un accès à sa partie interne par démontage du fond supérieur n'est donc pas applicable aux traitements de l'eau sous pression d'un réacteur nucléaire. D'autre part, la structure de ce filtre ne saurait être transposée au cas d'un filtre électromagnétique à lit de billes en ce qui concerne les dispositions des conduites d'arrivée et d'évacuation du fluide.

Le but de l'invention est donc de proposer un filtre pour l'épuration d'un fluide à haute pression et à haute température contenant des particules ferromagnétiques, consistant en une enveloppe cylindrique disposée avec son axe dans la direction verticale, fermée par deux fonds bombés à ses extrémités, renfermant des billes d'acier reposant sur une plaque perforée disposée transversalement dans l'enveloppe entre lesquelles passe le fluide à épurer et réunie à une conduite d'arrivée de fluide à épurer débouchant dans un espace libre ménagé sous la plaque et à une conduite d'évacuation du fluide épuré et en un dispositif d'aimantation des billes disposé à la périphérie de l'enveloppe, ce filtre pouvant être démonté très facilement pour accéder au lit de billes et ayant une grande efficacité malgré une structure interne très simple et très compacte.

Dans ce but :

— les billes sont contenues dans un espace limité par la plaque support et le fond supérieur du filtre,

— la conduite d'arrivée du fluide débouche dans l'espace libre sous la plaque perforée à travers le fond inférieur dans une direction non verticale et en une zone non centrale de ce fond inférieur,

— la conduite d'évacuation du fluide traverse le fond inférieur à sa partie centrale, puis le volume intérieur du filtre dans sa direction axiale, pour déboucher au-dessus de la surface supérieure du lit de billes immédiatement en dessous du fond supérieur, la conduite d'évacuation obturée à son extrémité supérieure constituant, dans cette zone au-dessus des billes, où s'effectue le recueil du fluide épuré, grâce à des perforations sur sa surface latérale, une crépine autour de laquelle la surface supérieure du lit de billes s'ordonne suivant une surface concave, lors de l'aimantation des billes par le dispositif d'aimantation.

On va maintenant décrire, en se référant aux figures jointes en annexe, un mode de réalisation du filtre suivant l'invention, dans le cas de l'épuration du fluide primaire d'un réacteur nucléaire à eau pressurisée.

La figure 1 représente, de façon schématique, le filtre vu en coupe et la disposition de ce filtre sur la canalisation d'eau primaire d'un réacteur à eau pressurisée.

La figure 2 représente une vue en coupe par un plan axial vertical du filtre.

La figure 3 représente une vue en perspective de la plaque support des billes.

La figure 4 représente une vue en perspective du filtre et de son dispositif d'aimantation.

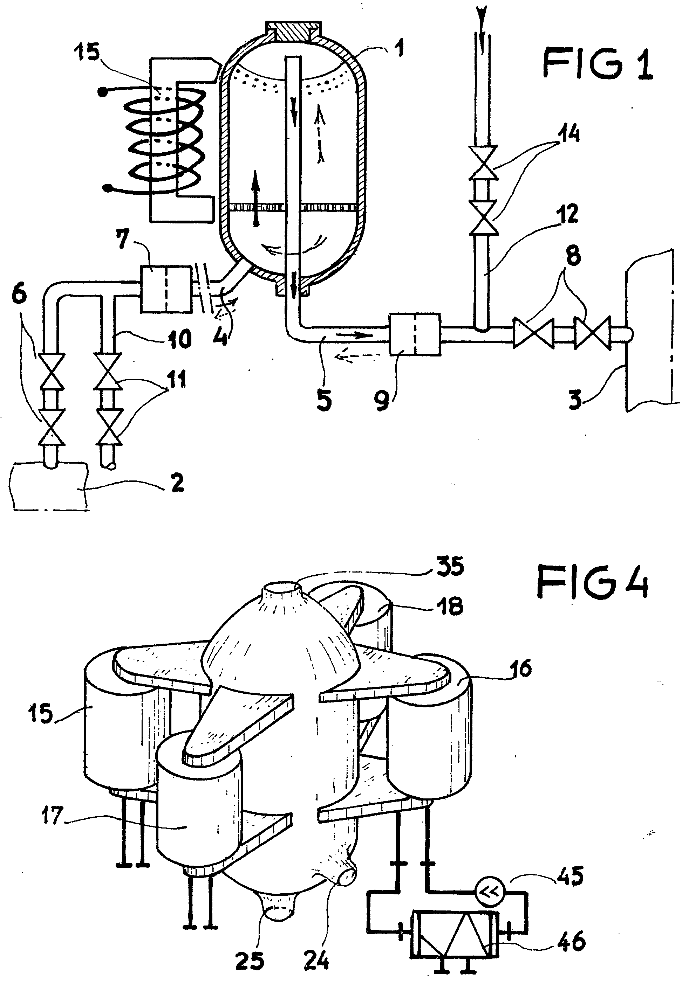

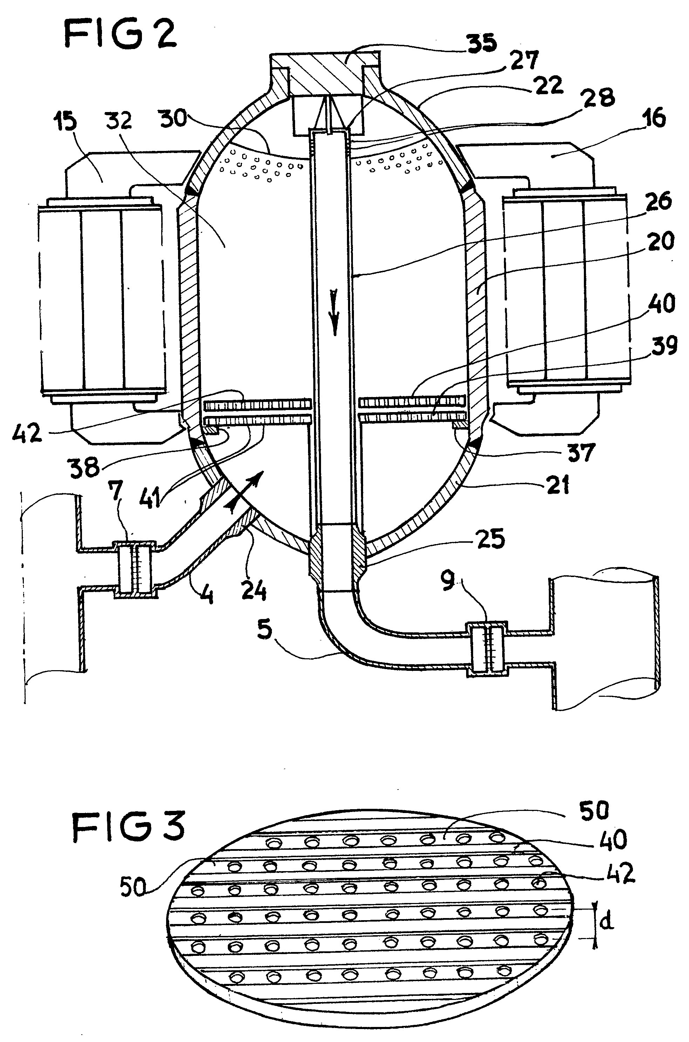

Sur la figure 1, on voit le filtre 1 constitué par une enveloppe cylindrique fermée par deux fonds hémisphériques, ce filtre qui sera décrit plus en détail en se référant à la figure 2 étant disposé dans un circuit de filtration intercalé entre des conduites 2 et 3 du circuit primaire d'un réacteur nucléaire à eau sous pression. On choisit deux portions de canalisation 2 et 3 du circuit primaire telle qu'il existe une différence de pression entre ces deux points du circuit suffisante pour assurer une circulation de l'eau primaire à l'intérieur du circuit de filtration.

Deux modes de branchement différents ont par exemple été envisagés dans le brevet français 2 437 862 de la demanderesse.

Dans l'un de ces modes de branchement, les conduites 2 et 3 se trouvent de part et d'autre d'une pompe primaire et dans l'autre mode de branchement le circuit de filtration est intercalé entre la branche froide en entrée de la cuve et la partie supérieure de cette cuve.

On a également représenté sur la figure 1 le sens de circulation de l'eau primaire dans le circuit de filtration. C'est ainsi que l'eau primaire pénètre dans le filtre par l'intermédiaire d'une conduite 4 reliée à la conduite du circuit primaire 2 avec interposition de deux vannes d'arrêt 6 et d'un filtre mécanique 7 pour arrêter les corps migrants éventuels provenant d'une fragmentation des billes et qui risquent d'être entraînés accidentellement par le fluide.

Après traversée du filtre, l'eau primaire purifiée ressort par une conduite 5 reliée à la conduite 3 du circuit primaire avec interposition de deux vannes d'arrêt 8 et d'un filtre mécanique 9.

Sur la conduite 4 est montée en dérivation une conduite 10 reliée à un récipient de lavage non représenté par l'intermédiaire de vannes 11.

Une conduite 12 reliée à un réservoir d'eau sous pression est également montée en dérivation sur la conduite 5 avec interposition de vannes 14.

Les conduites 11 et 12 servent, au cours des opérations de décolmatage du filtre qui seront décrites ultérieurement.

L'aimantation du lit de billes est assurée par des bobines magnétiques telles que 15 disposées à la périphérie du filtre 1.

En se reportant à la figure 2, on voit que le filtre 1 est constitué par une virole cylindrique 20 fermée à chacune de ses extrémités par un fond hémisphérique 21 (fond inférieur) et par un fond 23 (fond supérieur) également bombé.

Le filtre est disposé dans le circuit de filtration avec son axe vertical ; chacun des fonds est soudé aux extrémités de la virole 20.

Des pièces de raccordement de conduite 24 et 25 sont également disposées dans le fond inférieur 21 pour permettre le raccordement par soudage des conduites 4 et 5 respectivement.

La pièce de raccordement 25 est prolongée par une portion de conduite 26 disposée sensiblement verticalement suivant l'axe du filtre 1.

La conduite 26 est fermée à sa partie supérieure 27 qui est cependant percée d'orifices 28 traversant sa paroi latérale. La partie supérieure 27 de la conduite 26 constitue ainsi une crépine disposée au-dessus du niveau supérieur 30 du lit de billes 32 permettant la filtration du fluide primaire.

En effet, lorsqu'on alimente les bobines d'aimantation telles que 15 et 16 disposées à la périphérie du filtre 1, l'aimantation des billes d'acier magnétique constituant le lit 32 provoque la formation à la partie supérieure du lit de billes d'une surface courbe 30 laissant entièrement dégagée la partie supérieure 27 de la conduite 26.

La partie supérieure de la crépine 27 est engagée dans la partie inférieure creuse d'un bouchon de fermeture 35 fixé de façon amovible sur le fond supérieur 22 du filtre.

De cette façon la conduite 26 est maintenue dans sa position axiale à l'intérieur du filtre.

A la base de la partie cylindrique 20 du filtre 1 sont soudés des supports tels que 37 et 38 qui permettent la mise en place à l'intérieur du filtre de plaques supports 39 et 40 disposées transversalement dans toute la section du filtre autour de la conduite 26.

La plaque inférieure 39 comporte des perçages 41 sur toute son épaisseur permettant le passage du fluide tout en évitant des pertes de charge excessives.

Cette plaque 39 permet également le maintien de la plaque supérieure 40 sur laquelle repose le lit de billes 32.

Ainsi qu'il est visible à la figure 3, la plaque de support des billes 40 comporte des rainures 50, sur sa face supérieure en contact avec les billes, dirigées suivant des cordes de cette plaque 40 de forme circulaire. Des perçages cylindriques 42 débouchent à l'intérieur de ces rainures 50 et traversent entièrement la plaque support 40. Le diamètre de ces perçages est légèrement inférieur à la largeur des rainures. Ce diamètre est également inférieur au diamètre des billes afin d'éviter le passage de ces billes au travers de la plaque de support 40.

. Par exemple, dans le cas de billes d'un diamètre de 6 à 6,5 mm, ces perçages pourront avoir un diamètre de 5 mm.

La profondeur du rainurage, compte tenu de la largeur des rainures et du diamètre des billes est choisie pour qu'il ne puisse jamais y avoir obturation des perçages cylindriques 42 par les billes, même si ces billes viennent se placer au-dessus des perçages, dans les rainures.

De même la distance d'axe à axe des rainures est choisie de façon que cette distance soit différente d'un multiple du diamètre des billes, afin que la disposition des billes dans une rainure n'entraîne pas automatiquement la disposition des autres billes constituant la courbe inférieure du lit de billes dans les autres rainures.

L'ensemble du filtre est réalisé en acier inoxydable austénitique non magnétique à l'exception des plaques supports de billes qui sont en acier inoxydable magnétique.

De même les billes sont évidemment réalisées en acier inoxydable magnétique.

On voit que la conduite 4 qui est la conduite d'arrivée du fluide débouche à l'intérieur du filtre à travers le fond inférieur 21 dans une zone libre de ce filtre comprise entre la plaque support 39 et le fond inférieur 21.

De cette façon l'eau à épurer vient d'abord remplir cet espace libre avant d'être envoyée sous pression à travers les plaques supports 39 et 40 et le lit de billes 32.

On voit sur les figures 2 et 4 que le dispositif d'aimantation du filtre est constitué par quatre bobines 15-16-17 et 18 comportant un bobinage proprement dit et un circuit magnétique en forme de C.

Chacune des bobines d'aimantation est alimentée en courant électrique et comporte un circuit de refroidissement tel que le circuit représenté sur la figure 4 où l'on voit une pompe de circulation 45 et un réservoir de liquide de refroidissement 46.

Les quatre électro-aimants constituant le dispositif d'aimantation du filtre sont disposés à 90° à la périphérie de ce filtre, les extrémités des circuits magnétiques en forme de C étant très voisines de la surface extérieure cylindrique du filtre.

Le fonctionnement du dispositif est expliqué ci-après.

En début d'opération, on ouvre les vannes 6 et 8 permettant la mise en communication des conduites 2 et 3 du circuit primaire avec le circuit de filtration. La différence de pression de l'eau dans les conduites 2 et 3 permet alors la circulation de l'eau dans la conduite 4, au travers du filtre et dans la conduite 5, avec retour dans la conduite 3 après épuration.

Au démarrage de l'installation également, on aimante le lit de billes 32 pendant une minute en alimentant les électro-aimants avec un courant tel que le champ magnétique en l'absence de billes dans le filtre aurait une valeur de 3 200 Oe.

On amène alors le courant d'excitation des électro-aimants à une valeur telle que le champ aurait une valeur de 1 800 Oe en l'absence de billes dans le filtre.

Des gradients de champ sont formés à l'intérieur des interstices existant entre les billes, si bien que lorsque l'eau à épurer traverse le filtre, les particules d'oxyde magnétiques en suspension dans l'eau primaire sont attirées vers les régions de plus grand champ et restent fixées sur les billes.

Le débit d'eau primaire entrant grâce à la conduite d'arrivée 4 par la partie inférieure du filtre est distribué par les plaques 39 et 40 dans toute la section du filtre et circule grâce à la différence de pression entre les conduites 2 et 3 verticalement dans le filtre jusqu'à la partie supérieure du lit de billes où l'eau épurée de ses particules d'oxyde magnétiques vient s'écouler entre le niveau supérieur courbe 30 du lit de billes 32 et le fond supérieur 22 du filtre.

L'eau épurée repasse alors par les perçages 28 ménagés dans la surface latérale de la crépine 27 de la conduite 26 pour être évacuée par l'intermédiaire de la conduite 5 vers la conduite 3 du circuit primaire.

Les filtres mécaniques 7 et 9 permettent d'arrêter les corps migrants constitués par des fragments de billes éventuellement véhiculés par le fluide primaire. Ces filtres mécaniques sont interposés entre le filtre et les vannes d'isolement du circuit de façon à pouvoir toujours isoler le filtre en évitant de bloquer les vannes par les corps migrants.

Après un certain temps de fonctionnement, le lit de billes contient une quantité de particules d'oxyde qui peut être prohibitive et qui nécessite que l'on opère un décolmatage du filtre.

Pour effectuer ce décolmatage on isole le filtre de la boucle primaire par fermeture des vannes 6 et 8 et l'on désaimante le lit de billes par inversion et réduction programmées de la valeur du courant dans les bobines. De cette façon on ramène le champ rémanent à une valeur nulle.

On ouvre alors les vannes d'isolement 1 entre le filtre et le réservoir de décharge. Il se produit au cours de la décharge une émulsion diphasique eau-vapeur à l'intérieur du filtre, ce qui provoque un décollement des particules d'oxyde à la surface des billes. L'écoulement diphasique s'effectue en sens inverse de l'écoulement normal puisque l'eau sous pression partiellement vaporisée est évacuée par la conduite 4 qui est la conduite d'entrée de l'eau pressurisée dans le filtre en marche normale.

Le filtre se remplit de vapeur et la phase liquide non vaporisée se retrouve dans le réservoir de décharge. La pression et la température d'équilibre dépendent des volumes respectifs du filtre et du réservoir de décharge.

On isole alors le filtre du réservoir par fermeture des vannes 11 et l'on refroidit l'eau contenue dans le réservoir par aspersion ou par mise en route d'un circuit de réfrigération disposé autour du réservoir de décharge. On met alors le filtre en communication avec le réservoir de stockage d'eau sous pression et à haute température par ouverture des vannes 14 si bien que le filtre se remplit d'eau à haute température et à haute pression.

Le dispositif est alors prêt pour une nouvelle détente. Pour assurer un décolmatage satisfaisant du filtre il faut effectuer trois ou quatre détentes successives. Le décolmatage étant terminé et le filtre rempli d'eau à haute pression et à haute température, on rétablit la communication entre le circuit de filtration et le circuit primaire par ouverture des vannes 6 et 8.

Au cours des arrêts du filtre, si l'on désire effectuer une inspection à la partie supérieure du lit de billes et faire un échantillonnage de la garniture de billes, il suffit d'enlever le bouchon 35 disposé à la partie supérieure du filtre dans le fond 22 pour accéder au lit de billes.

Il n'est donc pas nécessaire de déconnecter les conduites d'arrivée et de départ du fluide primaire dans le filtre.

Grâce à l'ouverture pratiquée dans le fond 22 obturée par le bouchon 35, il est également possible de changer la garniture du lit de billes juste avant la mise en service de l'appareil et de remplacer cette garniture à l'aide de dispositifs commandés à distance, cette précaution étant nécessaire puisque la garniture de billes possède une certaine activité nucléaire après le fonctionnement du filtre.

Malgré une structure extrêmement simple, le filtre a une très grande efficacité car le fluide à traiter est également réparti sur toute la surface du filtre grâce à la plaque 40 percée de trous sur toute sa surface. D'autre part, le fluide épuré est entraîné par un dispositif à crépine qui permet d'éviter la réintroduction de particules polluantes dans le fluide épuré qui est entraîné hors du filtre par une conduite entièrement isolée de la masse de billes.

D'autre part, le fluide à épurer étant introduit à la partie inférieure du filtre et le fluide épuré étant évacué à partir d'une crépine disposée à la partie supérieure du filtre, le réentraînement des particules d'oxyde déjà retenues par les billes est évité puisque les particules d'oxyde ont tendance à se redéposer par gravité lors du mouvement ascendant du fluide en cours d'épuration dans le filtre.

Enfin, la conception du dispositif d'aimantation comportant des électro-aimants séparés permet une plus grande sécurité de fonctionnement, un démontage plus facile du dispositif d'aimantation et par là même une meilleure accessibilité au filtre.

Il est bien entendu que l'invention ne se limite pas au mode de réalisation qui vient d'être décrit mais qu'elle en comporte au contraire toutes les variantes et que l'on peut imaginer des modifications de points de détail sans pour autant sortir du cadre de l'invention.

C'est ainsi qu'il est possible d'utiliser des fonds de forme quelconque, par exemple elliptiques, au lieu de fonds sphériques comme dans l'exemple qui a été décrit. Au lieu d'un bouchon démontable 35 il est possible d'imaginer un fond démontable dans son ensemble permettant l'accès au lit de billes sur toute sa surface. On peut de même imaginer une structure différente en ce qui concerne le montage des plaques supports et de la conduite disposée axialement dans le filtre.

On peut également imaginer un dispositif d'aimantation différent de celui qui a été décrit pour réaliser une aimantation sensiblement uniforme de la charge de billes.

Enfin, bien que l'application préférentielle du dispositif selon l'invention soit l'épuration de l'eau sous pression d'un réacteur nucléaire, il est possible d'imaginer des applications différentes du dispositif dans le cas d'une utilisation industrielle d'eau à haute température et à haute pression (par exemple dans le cas des réacteurs nucléaires à eau bouillante ou à eau lourde).

## Revendications

1. Filtre pour l'épuration d'un fluide à haute pression et à haute température contenant des particules ferromagnétiques, consistant en une enveloppe (20) cylindrique disposée avec son axe dans la direction verticale, fermée par des fonds bombés (21, 22) à ses extrémités, renfermant des billes d'acier reposant sur une plaque perforée (40) disposée transversalement dans l'enveloppe (20), entre lesquelles passe le fluide à épurer et réunie à une conduite d'arrivée du fluide à épurer (24) débouchant dans un espace libre ménagé sous la plaque (40) et à une conduite d'évacuation du fluide épuré (25, 26) et en un dispositif d'aimantation (15, 16) des billes disposé à la périphérie de l'enveloppe 20 caractérisé en ce que :
— les billes (32) sont contenues dans un espace limité par la plaque support (40) et le fond supérieur (22) du filtre,
— la conduite d'arrivée du fluide (24) débouche dans l'espace libre sous la plaque perforée (40), à travers le fond inférieur (21), dans une direction non verticale et en une zone non centrale de ce fond inférieur,
— la conduite d'évacuation du fluide (25, 26) traverse le fond inférieur (21) à sa partie centrale, puis le volume intérieur du filtre dans sa direction axiale, pour déboucher au-dessus de la surface supérieure (30) du lit de billes (32), immédiatement au-dessous du fond supérieur (22), la conduite d'évacuation (25, 26) obturée à son extrémité supérieure (27) constituant, dans cette zone au-dessus des billes, où s'effectue le recueil du fluide épuré, grâce à des perforations (28) sur sa surface latérale, une crépine autour de laquelle la surface supérieure du lit de billes (32) s'ordonne suivant une surface concave (30), lors de l'aimantation des billes par le dispositif d'aimantation (15, 16).

2. Filtre selon la revendication 1 caractérisé en ce que le fond supérieur (22) de l'enveloppe du filtre est percé d'une ouverture obturable de façon étanche par un bouchon (35) permettant un accès au niveau supérieur (30) du lit de billes (32) et que l'extrémité supérieure de la conduite d'évacuation (25, 26) est engagée dans la partie inférieure creuse du bouchon (35).

3. Filtre selon l'une quelconque des revendications 1 et 2 caractérisé par le fait que la plaque support des billes (40) de forme circulaire comporte des rainures (50) sur sa face supérieure au contact avec les billes, usinées suivant des cordes de la plaque support (40) et d'une profondeur et d'une largeur telles, en fonction du diamètre des billes, que les billes n'obturent pas les trous débouchant dans le fond des rainures (50).

4. Filtre selon l'une quelconque des revendications 1-2 et 3 caractérisé par le fait que le dispositif d'aimantation est constitué par un ensemble d'électro-aimants (15-16-17) comportant une bobine et un circuit magnétique en forme de C disposés autour de l'enveloppe (20) du filtre.

## Claims

1. A filter for the purification of a fluid at high pressure and at high temperature containing ferromagnetic particles, consisting of a cylindrical envelope (20) arranged with its axis in the vertical direction, closed by domed heads (21, 22) at its ends, enclosing steel balls resting upon a perforated plate (40) arranged transversely in the envelope (20), between which passes the fluid to be purified, and connected to an inlet duct for the fluid to be purified (24), opening into a free space arranged under the plate (40), and to a discharge duct for the purified fluid (25,26) and of a device for magnetization (15, 16) of the balls, arranged at the periphery of the envelope 20, characterized in that :
— the balls (32) are contained in a space bounded by the support plate (40) and the upper head (22) of the filter ;
— the inlet duct for the fluid (24) opens into the free space under the perforated plate (40) through the lower head (21) in a non-vertical direction and into a zone non-central to this lower head ;
— the discharge duct for the fluid (25, 26) passes through the lower head (21) at its central part and then through the inside volume of the filter in its axial direction in order to open out above the upper surface (30) of the bed of balls (32) immediately below the upper head (22), the discharge duct (25, 26) being blocked off at its top end (27), constituting in this zone above the balls where collection of the purified fluid occurs, and thanks to perforations (28) in its lateral surface, a strainer round which the upper surface of the bed or balls (32) arranges itself along a concave surface (30) at the time of the magnetization of the balls by the magnetization device (15, 16).

2. A filter as in Claim 1, characterized in that the upper head (22) of the envelope of the filter is pierced with an opening which can be blocked off in a fluidtight manner by a stopper (35) enabling access to the upper level (30) of the bed of balls (32) and that the top end of the discharge duct (25, 26) engages in the hollow bottom portion of the stopper (35).

3. A filter as in either of the Claims 1 and 2, characterized by the fact that the ball support plate (40) of circular shape includes grooves (50) in its upper face in contact with the balls, machined along chords of the support plate (40) and of a depth and of a width such, as a function of the diameter of the balls, that the balls do not block off the holes opening out into the bottom of the grooves (50).

4. A filter as in any one of the Claims 1-2 and 3, characterized by the fact that the magnetization device consists of a set of electromagnets (15, 16, 17) including a coil and a magnetic circuit of C-shape, arranged round the envelope (20) of the filter.

**Ansprüche**

1. Filter zur Reinigung eines ferromagnetische Partikel enthaltenden Mediums mit hohem Druck und hoher Temperatur, bestehend aus einer mit der Achse in senkrechter Richtung angeordneten zylindrischen Hülle (20), die an den Enden durch gewölbte Böden (21, 22) geschlossen wird, auf einer quer in der Hülle (20) angeordneten Siebplatte (40) ruhende Stahlkugeln enthält, zwischen denen das zu reinigende Medium durchfliesst, und die mit einer in einen freien Raum unter der Platte (40) mündenden Zuleitungsleitung (24) für das zu reinigende Medium und einer Abflussleitung (25, 26) für das gereinigte Medium verbunden ist, weiterhin bestehend aus einer am Umfang der Hülle (20) angeordneten Kugel-Magnetisierungsvorrichtung (15, 16), dadurch gekennzeichnet, dass

— die Kugeln (32) in einem durch die Trägerplatte (40) und den oberen Filterboden (22) begrenzten Raum enthalten sind,

— die Medium-Zuleitungsleitung (24) in einen freien Raum unter der Siebplatte (40) durch den unteren Boden (21) in einer nicht senkrechten Richtung und in einem nicht mittigen Bereich dieses unteren Bodens mündet,

— die Medium-Abflussleitung (25, 26) durch den unteren Boden (21) im mittigen Bereich, dann durch den inneren Raum des Filters in Axialrichtung geht und über der oberen Fläche (30) der Kugelschicht (32) unmittelbar unter dem oberen Boden (22) mündet, wobei die am oberen Ende (27) verschlossene Abflussleitung (25, 26) in diesem Bereich oberhalb der Kugeln, wo das gereinigte Medium aufgefangen wird, dank den Öffnungen (28) an der Seitenfläche einen Saugkorb bildet, um den sich die obere Fläche der Kugelschicht (32) gemäss einer konkaven Fläche (30) bei der Magnetisierung der Kugeln durch die Magnetisierungsvorrichtung (15, 16) anordnet.

2. Filter nach Anspruch 1 dadurch gekennzeichnet, dass der obere Boden (22) der Filterhülle eine durch einen Stopfen (35) dicht verschliessbare Öffnung aufweist, durch die der obere Teil (30) der Kugelschicht (32) zugänglich ist und dass das obere Ende der Abflussleitung (25, 26) in den unteren hohlen Teil (35) des Stopfens eingeführt ist.

3. Filter nach irgendeinem der Ansprüche 1 und 2 dadurch gekennzeichnet, dass die kreisförmige Kugelträgerplatte (40) am oberen mit den Kugeln in Berührung kommenden Teil Nuten (50) aufweist, die nach den Sehnen der Trägerplatte (40) und mit einer solchen Tiefe und Breite in Abhängigkeit vom Kugeldurchmesser bearbeitet sind, dass die Kugeln nicht die in den Nutengründen (50) mündenden Öffnungen verstopfen.

4. Filter nach irgendeinem der vorgenannten Ansprüche 1, 2 und 3, dadurch gekennzeichnet, dass die Magnetisierungsvorrichtung aus einer Elektromagnet-Anordnung (15, 16, 17) mit einer Spule und einem C-förmigen Magnetkreis besteht, die um die Filterhülle (20) angeordnet sind.

FIG 1

FIG 4

# FIG 2

# FIG 3